# EUROPEAN PATENT APPLICATION

(11) **EP 2 578 482 A1**
(43) Date of publication of application: **10.04.2013**
(21) Application number: 12180038.7
(22) Date of filing: 10.08.2012
(51) Int. Cl.: B62K 3/06, B62K 3/10, B62K 15/00

(54) **Foldable bicycle**

(30) Priority: 05.10.2011 TW 100136038
(71) Applicant: Wang, Yao-Chin, Taichung City (TW)
(72) Inventor: Wang, Yao-Chin, Taichung City (TW); Wang, Shuo-Feng, Taichung City (TW); Liao, Chih-Teng, Taichung City (TW); Wang, Chao-Huei, Taichung City (TW)
(74) Representative: Becker Kurig Straus

(57) **Abstract**

A foldable bicycle has a front frame (10), a main frame (30), a rear frame (20) and a driving device. The front frame (10) has a front fork device (23) and a front wheel (14). The main frame (30) is connected to the front frame (10) and has a front arm (32), a connecting device (31) and a rear arm (33). The connecting device (31) is pivotally connected to the front arm (32). The rear arm (33) is pivotally connected to the connecting device (31). The rear frame (20) is rotatably connected to the main frame (30) and has a rear fork device (23) and a rear wheel (24). The driving device is mounted on the main frame (30) to drive the rear wheel (24) to rotate relative to the main frame (30) and the front frame (10).

## Description

### 1. Field of the Invention

The present invention relates to a bicycle, and more particularly to a foldable bicycle that can be operated conveniently and can avoid a user's hands becoming dirtied during a folding operation.

### 2. Description of Related Art

As is well-known, compared to motorized transportation, a bicycle virtually causes no environmental pollution, and so the benefits are obvious to a word facing serious contamination. Therefore, bicycles have become more and more popular in recent years. However, because the bicycle is propelled by humanpower, there tends to be a physical limit on the distance that the rider can travel. Many people in both rural and urban areas combine riding a bicycle with the various types of public transportation to enable the bicycle to become a means of commuting. Furthermore, in order to enable the rider to carry the bicycle conveniently between the public transportions, a foldable bicycle is continually being refined by the industry.

A conventional foldable bicycle has a main frame, a head tube, a seat and a handlebar device. The main frame has a front end and a rear end. The head tube is rotatably mounted on the front end of the main frame and has a top, a bottom, a front fork and a front wheel. The front fork is connected to the bottom of the head tube. The front wheel is rotatably connected to the front fork. The seat tube is rotatably mounted on the rear end of the main frame and has a top, a bottom , a saddle, a rear fork and a rear wheel. The saddle is mounted on the top of the seat tube. The rear fork is connected to the bottom of the seat tube. The rear wheel is rotatably connected to the rear fork. The handlebar device is connected to the top of the head tube.

When the conventional foldable bicycle is folded, the handlebar device is folded downwardly to be close to the front wheel and the steerer tube is rotated relative to the main frame to enable the front wheel, the front fork and the handlebar device to turn upwardly relative to the main frame and to move to a side of the main frame. In addition, the seat tube is rotated relative to the main frame to enable the rear wheel and the rear fork to turn upwardly relative to the main frame and to move to another side of the main frame and to parallel with the front wheel, the front fork and the handlebar device, and this can reduce the volume of the conventional foldable bicycle.

However, during the process of folding the conventional foldable bicycle, the user needs to turn the front wheel and the rear wheel upwardly relative to the main frame and in doing so, dirt that is on the wheels may be transferred to the hands and even clothing of the user, which is clearly inconvenient and offputting. In addition, when the user carries the conventional foldable bicycle in a folded condition, the user needs to grip the rims of the wheels and this may dirty the user's hands. This is especially true on rainy days when mud is more easily stuck to the wheels, and this will expose not only the user's hands but also surrounding passengers on public transport, which causes the bicycle to be less popular.

To overcome the shortcomings, the present invention provides a foldable bicycle to mitigate or obviate the aforementioned problems.

The main objective of the present invention is to provide a foldable bicycle that that can be operated conveniently and can avoid dirtying a user's hands during a folding operation.

The foldable bicycle in accordance with the present invention has a front frame, a main frame, a rear frame and a driving device. The front frame has a front fork device with a front fork and a front wheel rotatably connected to the front fork. The main frame is connected to the front frame and has a front arm, a connecting device and a rear arm. The front arm has a front pivot rod. The connecting device is pivotally connected to the front arm. The rear arm is pivotally connected to the connecting device and has a rear pivot rod. The rear frame is rotatably connected to the main frame and has a rear fork device with a rear fork and a rear wheel rotatably connected to the rear fork. The driving device is mounted on the main frame to drive the rear wheel to rotate relative to the main frame and the front frame.

Other objectives, advantages and novel features of the invention will become more apparent from the following detailed description when taken in conjunction with the accompanying drawings.

### IN THE DRAWINGS

Fig. 1 is a perspective view of a first embodiment of a foldable bicycle in accordance with the present invention;
Fig. 2 is another perspective view of the foldable bicycle in Fig. 1;
Fig. 3 is a side view of the foldable bicycle in Fig. 1;
Fig. 4 is an enlarged perspective view of a main frame of the foldable bicycle in Fig. 1;
Fig. 5 is an enlarged front view in partial section of a connecting device of the foldable bicycle in Fig. 1;
Fig. 6 is an enlarged cross section front view of the main frame of the foldable bicycle in Fig. 4;
Fig. 7 is an enlarged cross sectional bottom view of the main frame of the foldable bicycle in Fig. 6 along line 7-7;
Fig. 8 is an enlarged front view in partial section of the foldable bicycle in Fig. 1;
Fig. 9 is an enlarged and operational side view in partial section of the foldable bicycle in Fig. 8;
Fig. 10 is an operational top view of the foldable bicycle in Fig. 1;
Fig. 11 is a perspective view of the first embodiment of the foldable bicycle in Fig. 1 at a folded condition;
Fig. 12 is a side view of the first embodiment of the foldable bicycle in Fig. 11 at a folded condition;
Fig. 13 is an enlarged perspective view of a second embodiment of a main frame of a foldable bicycle in accordance with the present invention;
Fig. 14 is an enlarged side view in partial section of the connecting device of the foldable bicycle in Fig. 13;
Fig. 15 is another enlarged perspective view of a second embodiment of a main frame of a foldable bicycle in accordance with the present invention;
Fig. 16 is an enlarged side view in partial section of the connecting device of the foldable bicycle in Fig. 15;
Fig. 17 is an enlarged perspective view of a third embodiment of a main frame of a foldable bicycle in accordance with the present invention;
Fig. 18 is an enlarged side view in partial section of the connecting device of the foldable bicycle in Fig. 17; and
Fig. 19 is a perspective view of a fourth embodiment of a foldable bicycle in accordance with the present invention.

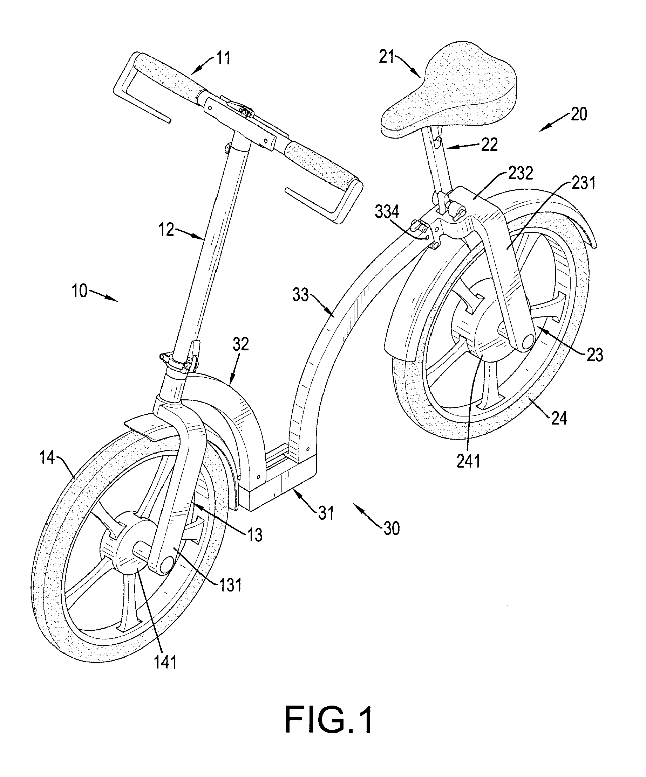

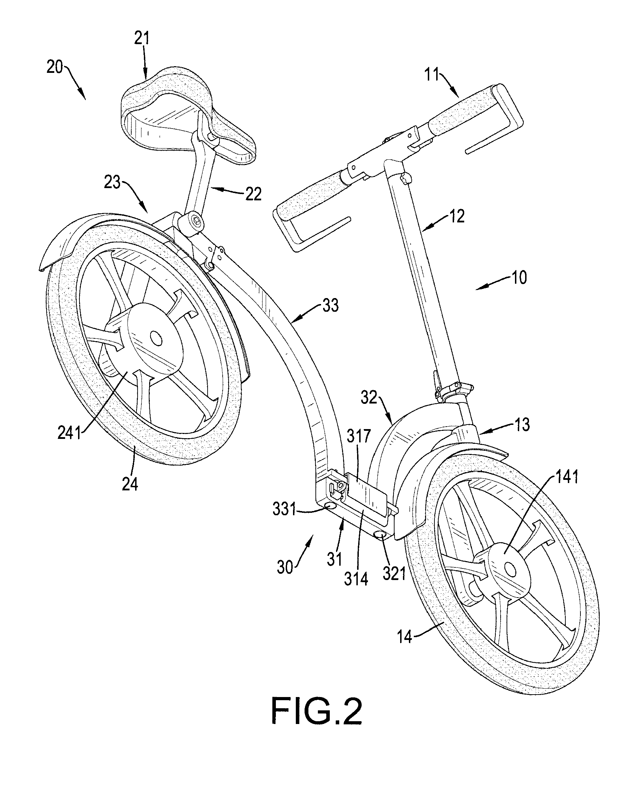

With reference to Figs. 1 and 2, a first embodiment of a foldable bicycle in accordance with the present invention has a front frame 10, a main frame 30, a rear frame 20 and a driving device.

The front frame 10 has a head tube 12, a front fork device 13, a front wheel 14 and a handlebar device 11.

The head tube 12 has a top end and a bottom end. The front fork device 13 is securely connected to the head tube 12 and has a front fork 131. The front fork 131 is securely connected to the bottom end of the head tube 12 and has a lower end. The front wheel 14 is rotatably connected to the front fork device 13 and has a front hub 141 rotatably connected to the lower end of the front fork 131. The handlebar device 11 is mounted on the top end of the head tube 12.

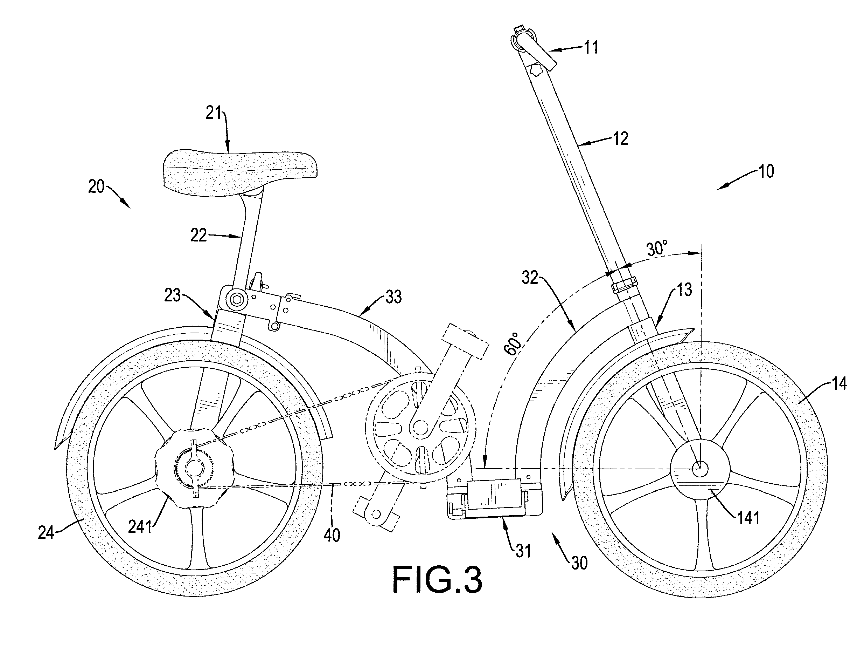

Furthermore, with reference to Fig. 3, a normal vector of the front wheel 14 is perpendicular to the ground, and an included angle between the normal vector of the front wheel 14 and the front fork 131 of the front fork device 13 is 0 to 45 degrees. Preferably, the included angle between the normal vector of the front wheel 14 and the front fork 131 of the front fork device 13 in the present invention is 30 degrees.

The main frame 30 is connected to the front frame 10 and has a front arm 32, a connecting device 31 and a rear arm 33.

With reference to Figs. 1, 4, 6 and 7, the front arm 32 may be curved to partly follow the shape of the wheel, is rotatably mounted around the head tube 12 near the bottom end of the head tube 12 and has an upper end, a lower end, a front pivot rod 321, a curved slot 322, an extending panel and a front positioning protrusion 323. The upper end of the front arm 32 is rotatably mounted around the head tube 12. The lower end of the front arm 32 is formed with the upper end of the front arm 32 and has a bottom face. The front pivot rod 321 is connected to the lower end of the front arm 32. The curved slot 322 is formed in the bottom face of the lower end of the front arm 32. The extending panel is transversally formed on and protrudes from the lower end of the front arm 32 and has a top face. The front positioning protrusion 323 is formed on and protrudes from the top face of the extending panel of the front arm 32. Furthermore, with reference to Fig. 3, a radian of the front arm 32 is π/4 t o 2π/3. Preferably, the radian of the front arm 32 in the present invention is π/3.

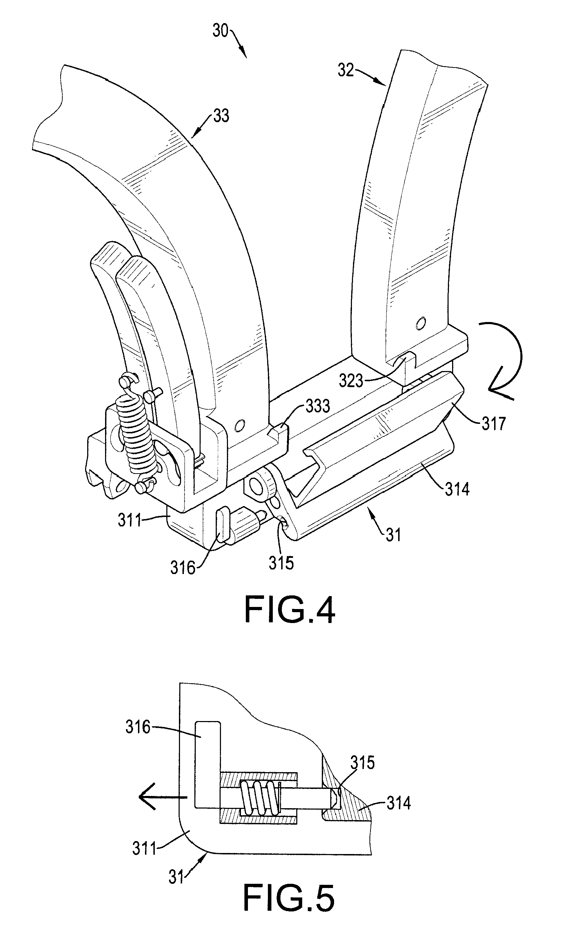

With further reference to Figs. 4 to 7, the connecting device 31 is pivotally connected to the front arm 32 and has a connecting mount 311, a front limiting rod 312, a rear limiting rod 313, a first clamping panel 314, a holding axle 316 and a second clamping panel 317.

The connecting mount 311 may be tabulate, is pivotally connected to the front arm 32 by the front pivot rod 321 extending through and holding the connecting mount 311 with the front arm 32 and has a front end, a rear end, a top face and a side face. The top face of the connecting mount 311 is pivotally connected to the lower end of the front arm 32 at the front end of the connecting mount 311 by the first front pivot rod 321. The front limiting rod 312 is formed on and protrudes from the top face of the connecting mount 311 near the front end of the connecting mount 311 and is slidably mounted in the curved slot 322 of the front arm 32. The rear limiting rod 313 is formed on and protrudes from the top face of the connecting mount 311 near the rear end of the connecting mount 311.

The first clamping panel 314 is pivotally mounted on the side face of the connecting mount 311 and has a rear side, an inner surface and a lock hole 315. The lock hole 315 is formed in the rear side of the first clamping panel 314. The holding axle 316 is movably mounted on the side face of the connecting mount 311 and is movably mounted in the lock hole 315 of the first clamping panel 314 by a spring pushing the holding axle 316 to hold the first clamping panel 314 on the connecting mount 311. The second clamping panel 317 is pivotally mounted in the inner surface of the first clamping panel 314 and selectively engages the front positioning protrusion 323 of the front arm 32 to hold the front arm 32 on the connecting mount 311 without rotating.

With further reference to Figs. 1, 4, 6, 7 and 8, the rear arm 33 may be curved to partly follow the shape of the rear wheel, is pivotally connected to the connecting mount 311 of the connecting device 31 and has a lower end, an upper end, a rear pivot rod 331, a curved slot 332, an extending panel, a rear positioning protrusion 333, a guiding rod 334 and a catch pawl 335. The lower end of the rear arm 33 is pivotally connected to the top face of the connecting mount 311 near the rear end of the connecting mount 311 and has a bottom face abutting with the top face of the connecting mount 311. The upper end of the rear arm 33 is formed on and protrudes upwardly from the lower end of the rear arm 33.

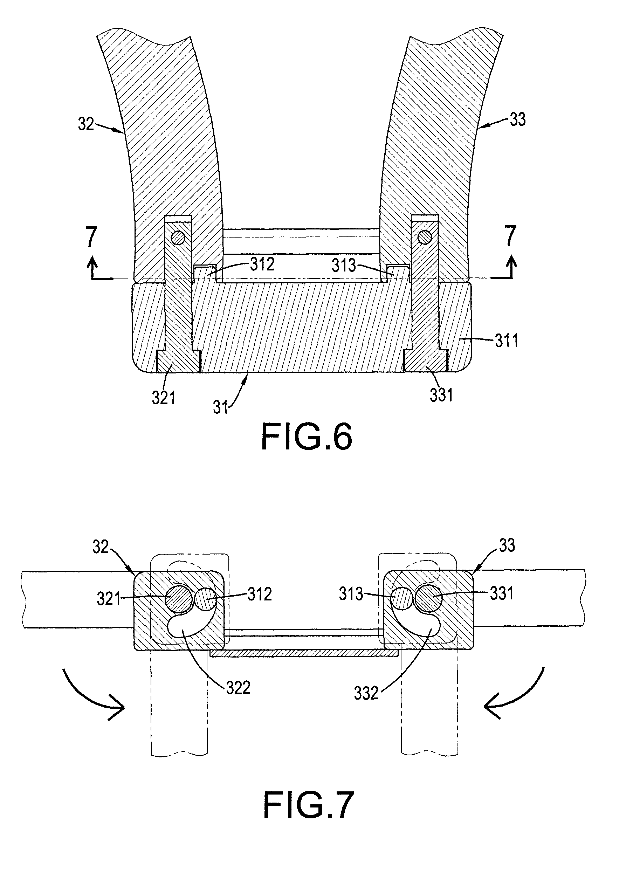

The rear pivot rod 331 extends through the top face of the connecting mount 311 and is connected to the lower end of the rear arm 33 to enable the rear arm 33 to pivotally connect to the connecting mount 311 of the connecting device 31. The curved slot 332 is formed in the bottom face of the lower end of the rear arm 33 and is mounted around the rear limiting rod 313 of the connecting device 31 to enable the rear limiting rod 313 to move along the curved slot 332 when the rear arm 33 rotates relative to the connecting mount 311 and parallels with front arm 32 as shown in Fig. 7. The extending panel is transversally formed on and protrudes from the lower end of the rear arm 33 and has a top face. The rear positioning protrusion 333 is formed on and protrudes from the top face of the extending panel of the rear arm 33 and selectively engages the second clamping panel 317 of the connecting device 31 to hold the rear arm 33 on the connecting mount 311 without rotating.

With reference to Figs. 1, 8 and 9, the guiding rod 334 is transversally and securely mounted in the rear arm 33 near the upper end of the rear arm 33. The catch pawl 335 is pressably connected to the upper end of the rear arm 33 above the guiding rod 334 and has a torsion spring to enable the catch pawl 335 to rotate relative to the upper end of the rear arm 33.

With reference to Figs. 1 to 3, the rear frame 20 is pivotally connected to the main frame 30 and has a rear fork device 23, a seat tube 22, a saddle 21 and a rear wheel 24.

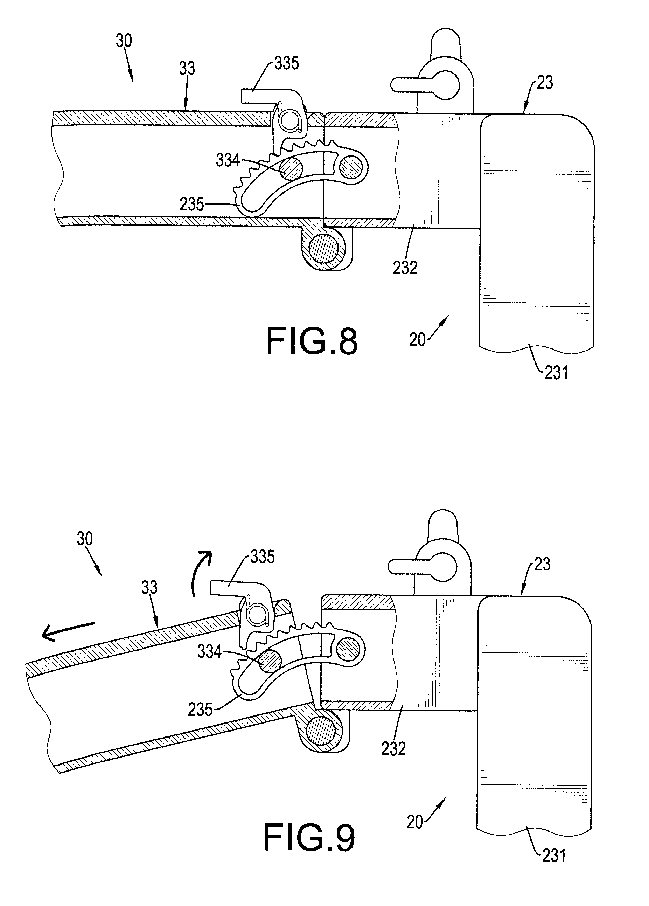

With further reference to Figs. 8 and 9, the rear fork device 23 is pivotally connected to the rear arm 33 of the main frame 30 and has a rear fork mount 232 and a rear fork 231. The rear fork mount 232 is pivotally connected to the rear arm 33 and has a front end, a rear end, a first side, a second side and an engaging ring 235. The front end of the rear fork mount 232 is pivotally connected to the upper end of the rear arm 33. With reference to Figs. 8 and 9, the engaging ring 235 is securely mounted in the front end of the rear fork mount 232, extends out of the front end of the rear fork mount 232 and is movably mounted around the guiding rod 334 of the rear arm 33. Then, the rear arm 33 can be pivoted relative to the rear fork mount 232 with the guiding rod 334 moving along the engaging ring 235. In addition, the engaging ring 235 has a top face and multiple teeth formed on and protruding from the top face of the engaging ring 235 and selectively engaging the catch pawl 335 to hold the rear arm 33 securely with the rear fork mount 232 of the rear fork device 23.

The rear fork 231 is formed on and protrudes downwardly from the first side of the rear fork mount 232 at a same side as the front fork 131 of the front fork device 13 as shown in Fig. 1 and has a lower end.

The seat tube 22 is pivotally connected to the second side of the rear fork mount 232 opposite to the rear fork 231 and has a top end. The saddle 21 is securely connected to the top end of the seat tube 22 above the rear fork device 23. The rear wheel 24 is rotatably connected to the rear fork 231 and has a rear hub 241 rotatably connected to the lower end of the rear fork 231.

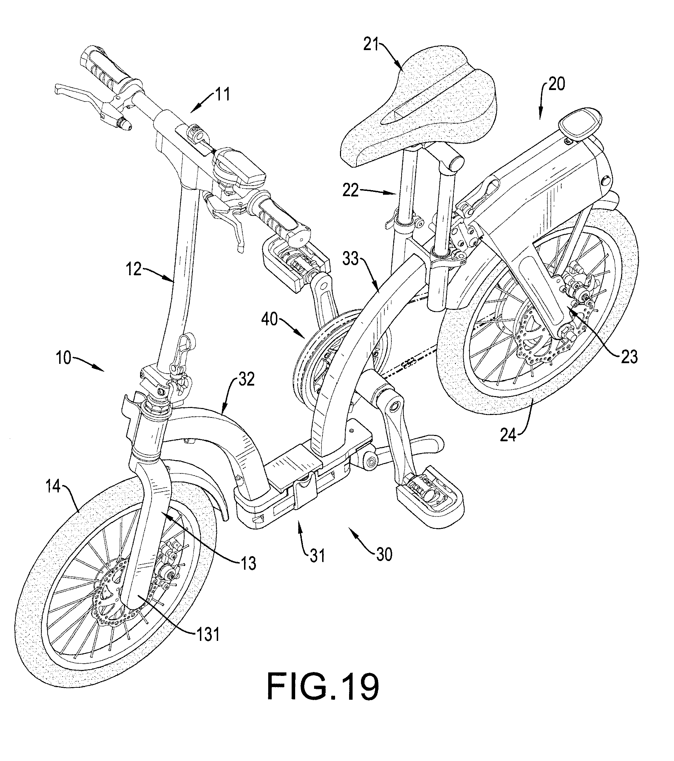

With reference to Figs. 1, 3 and 19, the driving device is mounted on the main frame 30 and is used to drive the rear wheel 24 to rotate relative to the main frame 30 and the front frame 10. The driving device can be an electric driving device and is mounted in the rear hub 241 of the rear wheel 24 or the front hub 141 of the front wheel 14 to enable the foldable bicycle to be propelled. In addition, the driving device can be a chain wheel-pedal device 40, mounted between the main frame 30 and the rear frame 20 to enable the rear wheel 24 to rotate relative to the main frame 30 and the front frame 10 as shown in Figs. 3 and 19.

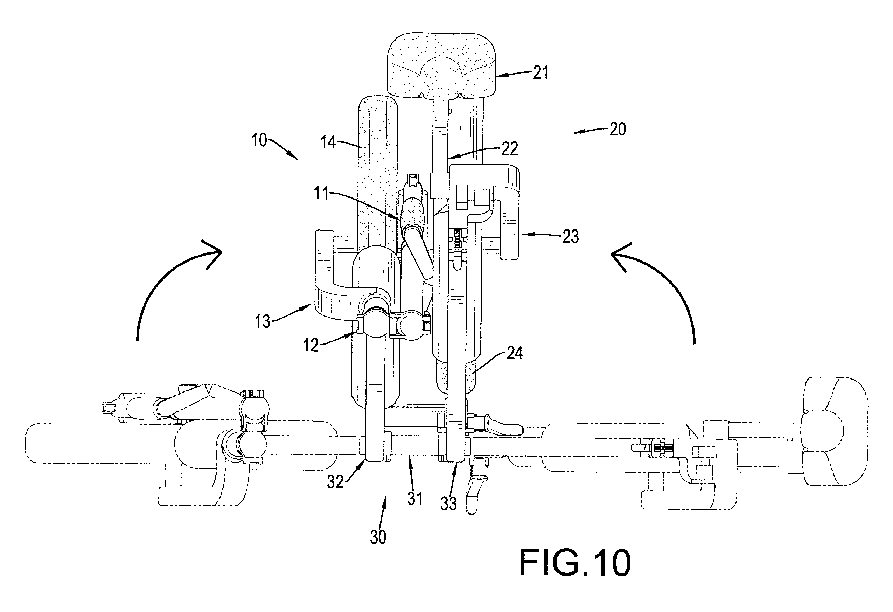

With reference to Figs. 1 and 10, when the first embodiment of a foldable bicycle in accordance with the present invention is folded to be transported and carried, the user can fold the handlebar device 11 downwardly relative to the front fork device 13 and pivot the handlebar device 11 relative to the head tube 12 to enable the handle device 11 to move closer to the front wheel 14 and opposite to the front fork device 13. In addition, the user can fold the seat tube 22 and the saddle 21 to rotate backwardly relative to the rear fork device 23. With further reference to Figs. 8 and 9, the user can press the catch pawl 335 to disengage from the engaging ring 235 to enable the guiding rod 334 to move along the engaging ring 235. Then, the rear wheel 24 can be moved closer to and be mounted below the rear arm 33 of the main frame 30 as shown in Fig. 10.

Furthermore, with reference to Figs. 4, 5 and 7, the user can pull the holding axle 316 to separate from the lock hole 315 to enable the first clamping panel 314 to rotate relative to the connecting mount 311. Then, the second clamping panel 317 can be separated from the positioning protrusions 323, 333 of the arms 32, 33 to enable the arms 32, 33 to rotate relative to the connecting mount 311 to parallel with each other with the curved slots 322, 332 of the arms 32, 33 moving relative to the limiting rods 312, 313 of the connecting device 31.

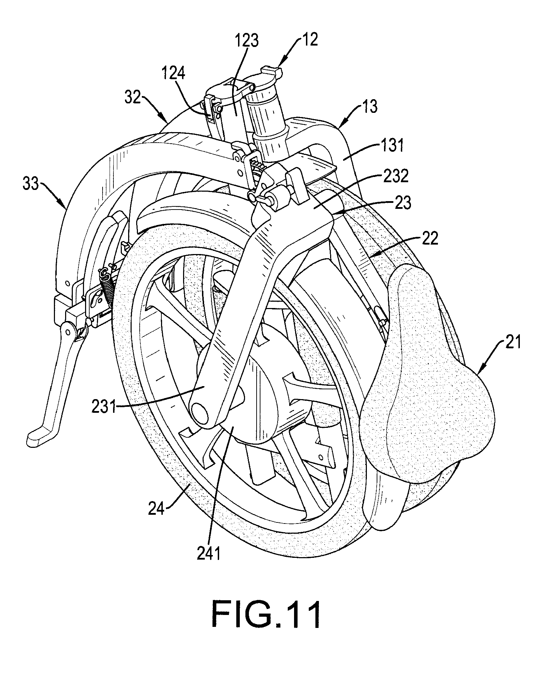

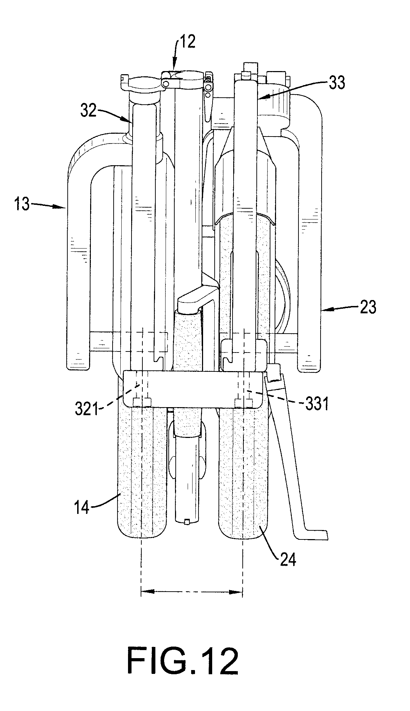

Then, the rear wheel 24 can be moved parallelly with the front wheel 14, the handlebar device 11 can be folded between the wheels 14, 24 and the forks 131, 231 can respectively be set beside the wheels 14, 24 as shown in Figs. 11 and 12. Additionally, with reference to Fig. 12, in the folded condition, a distance between the centers of the wheels 14, 24 is the same as a distance between the pivot rods 321, 331 of the arms 32, 33. Then, the user can transport and carry the foldable bicycle in a folded condition without dirtying the user's hands due to the wheels 14, 24 are set and mounted between the forks 131, 231 of the front frame 10 and the rear frame 20. Consequently, the volume of the foldable bicycle in accordance with the present invention can be reduced and the user can transport and carry the foldable bicycle in a folded condition conveniently. Furthermore, the curved arms 32, 33 of the main frame 30 also can enable reduction of the volume of the foldable bicycle in accordance with the present invention. In addition, the wheels 14, 24 are set between the forks 131, 231 and abut the ground when the foldable bicycle is set in a folded condition, and the user can carry and transport the foldable bicycle by easily pushing it due to the rotating wheels 14, 24.

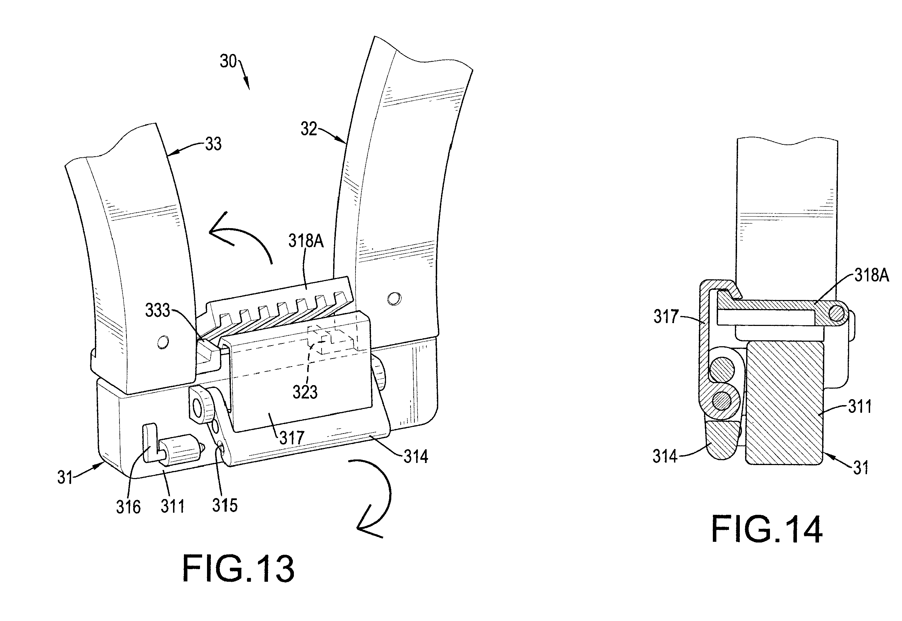

Additionally, with reference to Figs. 13 and 14, a second embodiment of a foldable bicycle in accordance with the present invention has a structure substantially same as that in the first embodiment except that the positioning protrusions 323, 333 are respectively formed on and protrude from the inner sides of the arms 32, 33 and align with and face each other. In addition, the connecting device 31 further has a third clamping panel 318A pivotally connected to the connecting mount 311 opposite to the first clamping panel 314 and selectively engaging the positioning protrusions 323, 333 of the arm 32, 33, and the second clamping panel 317 of the connecting device 31 engages the third clamping panel 318A when the third clamping panel 318A engages the positioning protrusions 323, 333 to hold the arms 32, 33 on the connecting mount 311 without rotating.

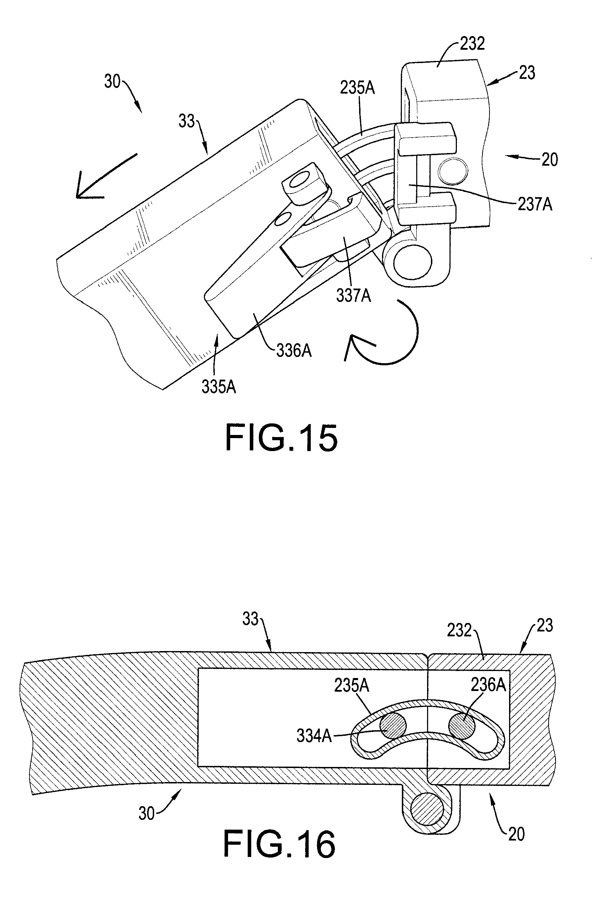

Furthermore, with reference to Figs. 15 and 16, in the second embodiment of a foldable bicycle in accordance with the present invention, the engaging ring 235 between the arms 32, 33 is replaced by a limiting ring 235A, the rear fork device 23 further has a rear fork limiting post 236A and a rear fork holding base 237A. The rear fork limiting post 236A is transversally and securely mounted in the rear fork mount 232 near the front end of the rear fork mount 232 and is movably mounted in the limiting ring 235A. The rear fork holding base 237A is securely mounted on the first side of the rear fork mount 232 at the front end of the rear fork mount 232. In addition, the rear arm 33 further has a rear arm limiting post 334A and a rear arm locking element 335A. The rear arm limiting post 334A is transversally and securely mounted in the rear arm 33 near the upper end of the rear arm 33 and is movably mounted in the limiting ring 235A to enable the limiting ring 235A to be held between the limiting posts 236A, 334A. The rear arm locking element 335A is a quick release element and has a pivotal stem 336A and a locking button 337A. The pivotal stem 336A is pivotally mounted on a side of the rear arm 33 at the upper end of the rear arm 33 and faces the rear fork holding base 237A. The locking button 337A is pivotally connected to the pivotal stem 336A and selectively engages the rear fork holding base 237A of the rear fork device 23.

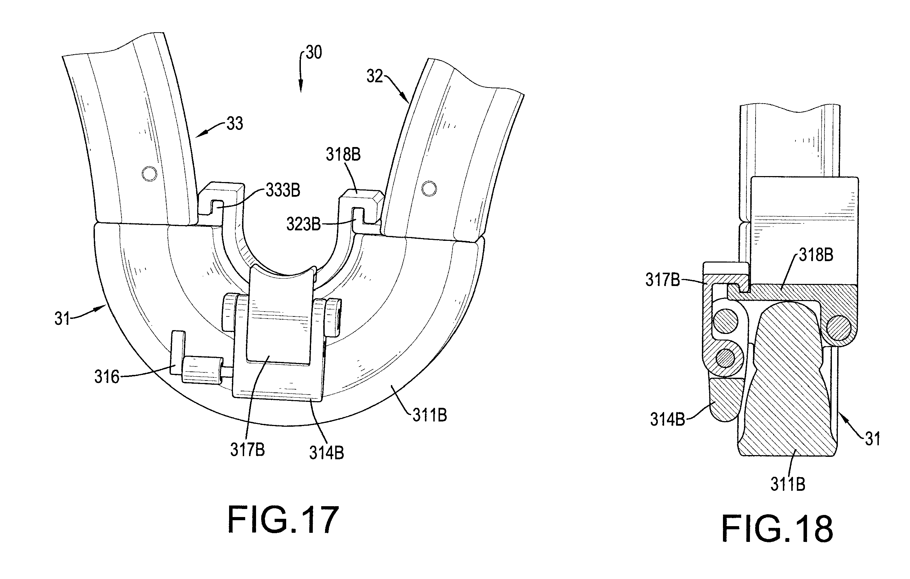

Furthermore, with reference to Figs. 17 and 18, a third embodiment of a foldable bicycle in accordance with the present invention has a structure substantially the same as that in the first embodiment except that the positioning protrusions 323B, 333B are respectively formed on and protrude from the inner sides of the arms 32, 33 and align with and face each other. In addition, the connecting mount 311B is curved and the connecting device 31 further has a third clamping panel 318B pivotally connected to the connecting mount 311B opposite to the first clamping panel 314B and selectively engaging the positioning protrusions 323B, 333B of the arm 32, 33, and the second clamping panel 317B of the connecting device 31 engages the third clamping panel 318B when the third clamping panel 318B engages the positioning protrusions 323B, 333B to hold the arms 32, 33 on the connecting mount 311B without rotating.

In addition, with reference to Fig. 19, a fourth embodiment of a foldable bicycle in accordance with the present invention has a structure substantially the same as that in the first embodiment except that the shapes of the frames 10, 20, 30 of the fourth embodiment of the foldable bicycle are different from the shapes of the frames 10, 20, 30 of the first embodiment of the foldable bicycle in accordance with the present invention.

Even though numerous characteristics and advantages of the present invention have been set forth in the foregoing description, together with details of the structure and features of the invention, the disclosure is illustrative only. Changes may be made in the details, especially in matters of shape, size, and arrangement of parts within the principles of the invention to the full extent indicated by the broad general meaning of the terms in which the appended claims are expressed.

## Claims

1. A foldable bicycle, **characterized in that** the foldable bicycle has:
a front frame (10) having
a front fork device (13); and
a front wheel (14) having a front hub (141) rotatably connected to the front fork device (13);
a main frame (30) connected to the front frame (10) and having
a front arm (32) pivotally connected to the front frame (10) and having
an upper end pivotally connected to the front frame (10);
a lower end formed with the upper end of the front arm (32) and having a bottom face; and
a front pivot rod (321) connected to the lower end of the front arm (32);
a connecting device (31) pivotally connected to the front arm (32) and having
a front end, the lower end of the front arm (32) pivotally connected to the connecting device (31) near the front end of the connecting device (31) by the front pivot rod (321) holding the connecting device (31) with the front arm (32); and
a rear end; and
a rear arm (33) pivotally connected to the connecting device (31) and having
a lower end pivotally connected to the connecting device (31) near the rear end of the connecting device (31) and having a bottom face abutting with the connecting device (31);
an upper end formed on and protruding upwardly from the lower end of the rear arm (33); and
a rear pivot rod (331) connected to the lower end of the rear arm (33) to enable the rear arm (33) to pivotally connect to the connecting device (31) and to enable the rear arm (33) to rotate to parallel with the front arm (32);
a rear frame (20) pivotally connected to the main frame (30) and having
a rear fork device (23) pivotally connected to the rear arm (33) of the main frame (30); and
a rear wheel (24) having a rear hub (241) rotatably connected to the rear fork device (23); and
a driving device mounted on the main frame (30) to drive the rear wheel (24) to rotate relative to the main frame (30) and the front frame (10); and
wherein a distance between the centers of the wheels (14, 24) is same as a distance between the pivot rods (321, 331) of the arms (32, 33) in a folded condition.

2. The foldable bicycle as claimed in claim 1, wherein
the front arm (32) has a curved slot (322) formed in the bottom face of the lower end of the front arm (32);
the rear arm (33) has a curved slot (332) formed in the bottom face of the lower end of the rear arm (33); and
the connecting device (311) has
a top face abutting with the bottom faces of the lower ends of the arms (32, 33);
a front limiting rod (312) formed on and protruding from the top face of the connecting device (31) near the front end of the connecting device (31) and slidably mounted in the curve slot (322) of the front arm (32); and
a front limiting rod (313) formed on and protruding from the top face of the connecting device (31) near the rear end of the connecting device (31) and slidably mounted in the curve slot (332) of the rear arm (33).

3. The foldable bicycle as claimed in claim 1 or 2, wherein
the front fork device (13) has a front fork (131) rotatably connected to the front hub (141) of the front wheel (14) at a side of the front wheel (14);
the rear fork device (23) has
a rear fork mount (232) pivotally connected to the rear arm (33) and having
a front end pivotally connected to the upper end of the rear arm (33);
a rear end;
a first side at a same side as the side of the front wheel (14); and
a second side; and
a rear fork (231) formed on and protruding downwardly from the first side of the rear fork mount (232) at a same side as the front fork (131) of the front fork device (13) to enable the wheels (14, 24) to mount between the forks (131, 231) in a folded condition.

4. The folding bicycle as claimed in claim 1 or 2 or 3, wherein
the rear arm (33) has
a guiding rod (334) transversally and securely mounted in the rear arm (33) near the upper end of the rear arm (33).; and
a catch pawl (335) pressably connected to the upper end of the rear arm (33) above the guiding rod (334);
the rear fork device (23) has an engaging ring (235) securely mounted in the front end of the rear fork mount (232), extending out of the front end of the rear fork mount (232) and movably mounted around the guiding rod (334) of the rear arm (33) and having a top face and multiple teeth formed on and protruding from the top face of the engaging ring (235) and selectively engaging the catch pawl (335) to hold the rear arm (33) securely with the rear fork mount (232) of the rear fork device (23); and
the rear arm (33) is pivoted relative to the rear fork mount (232) with the guiding rod (334) moving along the engaging ring (235) when pressing the catch pawl (335).

5. The folding bicycle as claimed in claim 1 or 2 or 3, wherein
the rear fork device (23) has
a limiting ring (235A) mounted between the rear fork mount (232) and the rear arm (33);
a rear fork limiting post (236A) transversally and securely mounted in the rear fork mount (232) near the front end of the rear fork mount (232) and movably mounted in the limiting ring (235A); and
a rear fork holding base (237A) securely mounted on the first side of the rear fork mount (232) at the front end of the rear fork mount (232); and
the rear arm (33) has
a rear arm limiting post (334A) transversally and securely mounted in the rear arm (33) near the upper end of the rear arm (33) and movably mounted in the limiting ring (235A) to enable the limiting ring (235A) to hold between the limiting posts (236A, 334A); and
a rear arm locking element (335A) being a quick release element and having
a pivotal stem (336A) pivotally mounted on a side of the rear arm (33) at the upper end of the rear arm (33) and facing the rear fork holding base (237A); and
a locking button (337A) pivotally connected to the pivotal stem (336A) and selectively engaging the rear fork holding base (237A) of the rear fork device (23).

6. The folding bicycle as claimed in claim 1 or 2 or 3, wherein
the front arm (32) has
an extending panel transversally formed on and protruding from the lower end of the front arm (32) and having a top face; and
a front positioning protrusion (323) formed on and protruding from the top face of the extending panel of the front arm (32);
the rear arm (33) has
an extending panel transversally formed on and protruding from the lower end of the rear arm (33) and having a top face; and
a rear positioning protrusion (333) formed on and protruding from the top face of the extending panel of the rear arm (33);
the connecting device (31) has
a connecting mount (311) pivotally connected to the front arm (32) by the front pivot rod (321) extending through and holding the connecting mount (311) with the front arm (32);
a first clamping panel (314) pivotally mounted on a side face of the connecting mount (311) and having
a rear side;
an inner surface; and
a lock hole (315) formed in the rear side of the first clamping panel (314);
a holding axle (316) movably mounted on the side face of the connecting mount (311) and movably mounted in the lock hole (315) of the first clamping panel (314) by a spring pushing the holding axle (316) to hold the first clamping panel (314) on the connecting mount (311); and
a second clamping panel (317) pivotally mounted in the inner surface of the first clamping panel (314) and selectively engaging the front positioning protrusion (323) of the front arm (32) to hold the front arm (32) on the connecting mount (311) without rotating.

7. The folding bicycle as claimed in claim 1 or 2 or 3, wherein
the front arm (32) has a front positioning protrusion (323B) formed on the front arm (32) at the lower end of the front arm (32);
the rear arm (33) has a rear positioning protrusion (333B) formed on the rear arm (33) at the lower end of the rear arm (33) and aligning with the front positioning protrusion (323B) of the front arm (32);
the connecting device (31) has
a connecting mount (311B) pivotally connected to the front arm (32) by the front pivot rod (321) extending through and held the connecting mount (311B) with the front arm (32);
a first clamping panel (314B) pivotally mounted on a side face of the connecting mount (311B) and having
a rear side;
an inner surface; and
a lock hole (315) formed in the rear side of the first clamping panel (314B);
a holding axle (316) movably mounted on the side face of the connecting mount (311B) and movably mounted in the lock hole (315) of the first clamping panel (314B) by a spring pushing the holding axle (316) to hold the first clamping panel (314B) on the connecting mount (311B);
a second clamping panel (317) pivotally mounted in the inner surface of the first clamping panel (314B); and
a third clamping panel (318B) pivotally connected to the connecting mount (311B) opposite to the first clamping panel (314B) and selectively engaging the positioning protrusions (323B, 333B) of the arm (32, 33), and the second clamping panel (317B) of the connecting device 31 engaging the third clamping panel (318B) when the third clamping panel (318B) engages the positioning protrusions (323B, 333B) to hold the arms (32, 33) on the connecting mount (311B) without rotating.

8. The folding bicycle as claimed in claim 1 or 2 or 3, wherein one of the arms (32, 33) of the main frame (30) is curved.

9. The folding bicycle as claimed in claim 8, wherein
the front wheel (14) has a normal vector perpendicular to the ground; and
an included angle between the normal vector of the front wheel (14) and the front fork (131) of the front fork device 13 is 0 to 45 degrees.

10. The folding bicycle as claimed in claim 8 or 9, wherein the front arm (32) is curved and has a radian between π/4 t o 2π/3.
